# EUROPEAN PATENT SPECIFICATION

(11) **EP 2 147 809 B1**
(45) Date of publication and mention of the grant of the patent: **21.05.2014**
(21) Application number: 08161088.3
(22) Date of filing: 24.07.2008
(51) Int. Cl.: B60G 3/20, B62D 7/18

(54) **Road vehicle suspension and corresponding road vehicle**
Straßenfahrzeugaufhängung und zugehöriges Straßenfahrzeug
Suspension de véhicule routier et véhicule routier correspondant

(43) Date of publication of application: 27.01.2010
(73) Proprietor: Iveco France S.A., 69200 Vénissieux (FR)
(72) Inventor: Leorat, Pascal, 07690, VILLEVOCANCE (FR)
(74) Representative: Borsano, Corrado

(56) References cited:
- EP-B- 1 727 689
- JP-A- 59 109 407

## Description

The present invention relates to a road vehicle suspension and to a road vehicle comprising at least one suspension such as this.

The road vehicles at which the invention is aimed are, in particular, public transport vehicles, namely those capable of carrying passengers. It also finds an application to vehicles of the heavy goods vehicle type, or alternatively to motor cars.

Suspensions with which, in particular, buses or coaches with independent wheels are fitted are known and comprise a stub axle secured to the hub of a corresponding wheel, and a steering knuckle articulated with respect to this stub axle about a physically embodied axis known as the "kingpin". There are also two wishbones, an upper wishbone and a lower wishbone respectively, which connect the steering knuckle and the body of the vehicle, being articulated to these two mechanical components. Examples of known suspensions for roads vehicles are disclosed in EP17276689 and in JP59109407.

These known suspensions do, however, display certain disadvantages, associated in particular with their complex structure. This being the case, the invention aims to propose a suspension for a road vehicle, of the aforementioned type, which is of a simpler structure than the previously known solutions.

To this end, the subject of the invention is a suspension for a road vehicle, particularly for a bus, coach or heavy goods vehicle, comprising a stub axle that can be secured to a hub supporting a wheel of the said vehicle, this stub axle being articulated with respect to a steering knuckle about an axis of articulation, this suspension further comprising two wishbones, an upper wishbone and a lower wishbone, respectively, which are articulated with respect to the steering knuckle, characterized in that the two points about which the two wishbones are articulated with respect to the steering knuckle are positioned substantially on the axis of articulation.

According to other features:
- this suspension comprises suspension elements, particularly a suspension pad and/or at least one shock absorber and/or at least one anti-roll bar, these suspension elements exerting on the steering knuckle forces the directions of which lie in a plane containing the axis of articulation;
- the suspension pad exerts on the steering knuckle a downwardly directed force that has a tendency to oppose any pivoting of this steering knuckle about this axis of articulation;
- each wishbone, the upper wishbone and lower wishbone respectively, is articulated to the steering knuckle via a corresponding elastic link.

Another subject of the invention is a road vehicle, particularly a bus, coach or heavy goods vehicle, comprising a suspension like the one described hereinabove.

The invention will be described hereinafter with reference to the attached drawings which are given solely by way of non-limiting example and in which:
- figure 1 is a perspective view schematically illustrating a road vehicle suspension according to the invention;
- figure 2 is a view in cross section, illustrating the suspension of figure 1;
- figure 3 is a perspective view similar to figure 1, illustrating, for the purposes of comparison, a suspension according to the prior art; and
- figure 4 is a schematic transverse view illustrating the various loads applied to the suspension according to the invention.

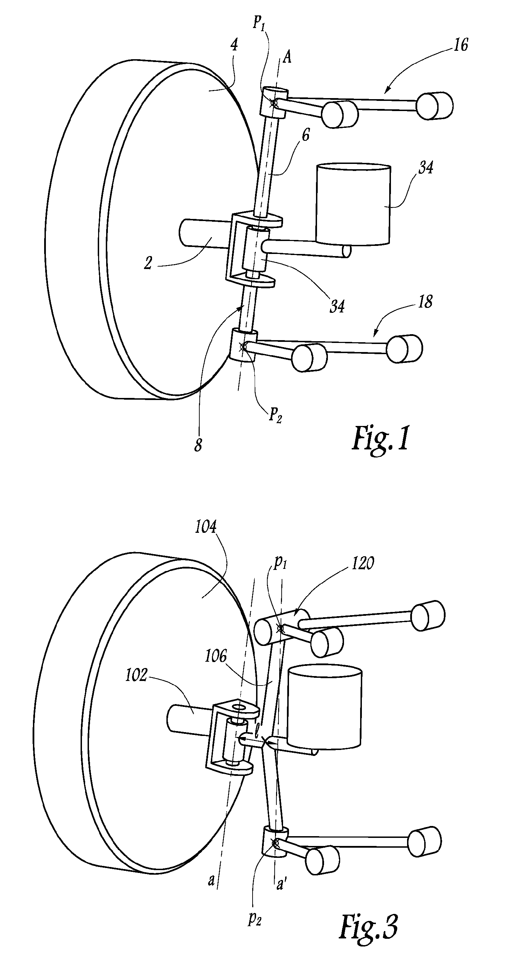

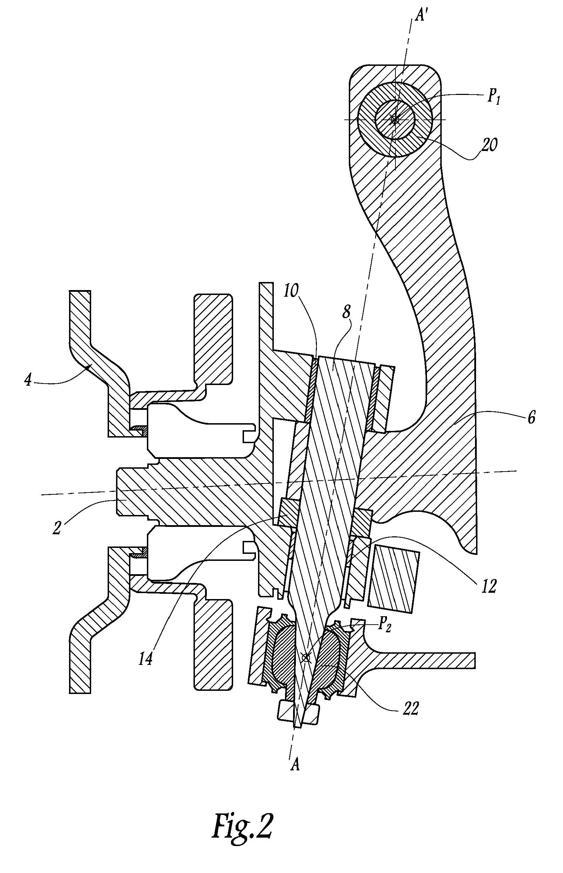

The road vehicle suspension illustrated in particular in figures 1 and 2 comprises first of all, in the conventional way, a stub axle 2, secured by any appropriate means to the hub 4 supporting a wheel, which is not depicted. The stub axle 2 is supported by a steering knuckle 6, also of known type. To achieve this, there is a physically embodied axis of articulation between the stub axle and the steering knuckle and this is known as the kingpin and is denoted by the reference 8. The geometric axis, slightly inclined with respect to the vertical, about which the stub axle and the steering knuckle pivot one with respect to the other, is also shown and labelled A.

It will be noted that the steering knuckle 6 and the kingpin 8 are secured to one another both in terms of rotation and in terms of translation. Furthermore, in order to guide and facilitate rotation of the kingpin 8 with respect to the stub axle 2, there is a ring 10, at the top, and a needle bearing 12 at the bottom of this kingpin 8.

A thrust ball bearing 14 is inserted between the facing walls of the stub axle and of the steering knuckle so as to limit the relative friction between these two elements. In the example illustrated, use is made of a needle bearing and of a thrust ball bearing. However, by way of alternative, provision may be made for the use of two needle bearings or alternatively of two rings.

The vehicle also comprises a steering system, of conventional type, which is not depicted in the figures. This steering system acts on the stub axle via an additional ball joint connection and connecting lever, itself fixed to the stub axle 2. This connection and this lever are also of known type.

The suspension according to the invention also comprises two wishbones, an upper wishbone 16 and a lower wishbone 18, respectively, also of a known type. The two wishbones are more particularly visible in figure 1. The upper wishbone 16 connects the top end of the steering knuckle 6 and the body of the vehicle, which is not depicted in these figures, while the lower wishbone 18 connects the bottom part of the kingpin 8 and the aforementioned body.

More specifically, in figure 2, the point about which, in a transverse plane, the upper wishbone 16 and the steering knuckle 6 are articulated is labelled P₁. This articulation is afforded by means of an elastic link 20 of a type known per se. The point, in this same transverse plane, about which the lower wishbone 18 is articulated with respect to the kingpin 8 is also labelled P₂.

This articulation is afforded by means of another elastic link 22, also of a known type. This link 22 allows the lower wishbone 18 to pivot with respect to the kingpin 8. However, given that the latter is secured to the steering knuckle 6, this link 22 also allows this lower wishbone to pivot with respect to this steering knuckle.

By way of an alternative, this link 22 may directly connect the steering knuckle 6 to the lower wishbone 18. In other words, this steering knuckle then extends downwards, in figure 2, beyond the kingpin 8, so as to incorporate the link 22. In such an instance, the kingpin 8 has smaller axial dimensions than in figure 2 and namely does not, for example, extend beyond the bearing 12.

The geometric axis connecting the aforementioned points of articulation, namely P₁ and P₂, is labelled A' in figure 2. It will be noted that this axis A' substantially coincides with the geometric axis A of articulation of the stub axle and of the steering knuckle. In other words, the articulation points P1 and P2 are positioned on the axis of articulation A.

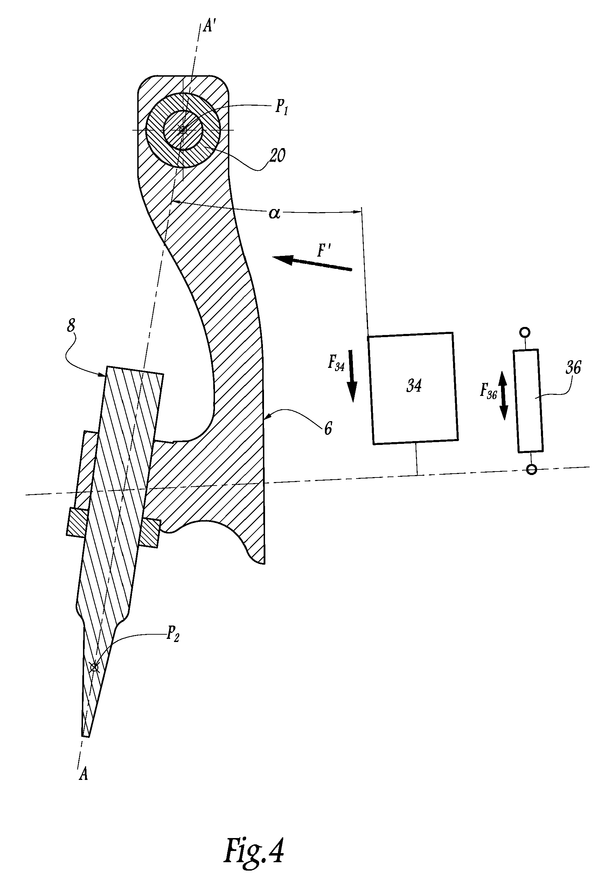

Finally, the suspension according to the invention comprises, in the conventional way, various suspension elements. With reference to figure 4 in particular, we find a suspension pad 34, together with a shock absorber 36. In addition, there may also be an anti-roll bar, not depicted.

In use, the stub axle 2 transmits the load from the wheel to the steering knuckle 6, via the kingpin 8, and to the steering system via the additional ball joint connection, not depicted. Whatever the situation, the point at which loads are applied by the stub axle to the steering knuckle lies on the axis A and, disregarding kingpin friction, the component of the corresponding moment along the axis A is zero.

In addition, as shown in particular by figure 4, the pad 34 applies a force F₃₄ which is vertical and always directed downwards. In addition, the shock absorber 36 exerts a force F₃₆ the direction of which is also vertical, but the direction of which may be up or down.

According to the invention, it is advantageous for the pad and this shock absorber and, more generally, for any suspension elements acting on the steering knuckle, to be oriented appropriately so that the forces they generate lie in a plane substantially containing the axis A. Thus, in figure 4, this plane corresponds to that of the page which means that, in other words, F₃₄ and F₃₆ do not extend from back to front of the page. This being the case, the moments associated with these forces are unable to cause the steering knuckle to pivot about the axis A, thus allowing elastic articulations to be used at points P₁ and P₂.

In addition, again with reference to this figure 4, it is advantageous for the suspension spring to be orientated in such a way that the force F₃₄ that it applies to the steering knuckle increases the stability thereof. Thus, this force, which is always directed downwards, runs vertically, whereas the axis of articulation A' is inclined. This force F₃₄ thus forms, with the axis of articulation A, an angle labelled α.

The action applied by this force therefore makes the steering knuckle hyperstable in so far as this force F₃₄ tends to oppose any rotation of the steering knuckle about the axis A'. Compare this with other forces, such as the force labelled F' and depicted in dotted line in figure 4, which by contrast tends to cause such a rotation, because of their orientation.

The subject of the invention should be compared with the prior art solution depicted in figure 3. That perspective diagram which is similar to figure 1 again shows the stub axle 102, the hub 104, the steering knuckle 106 and the two wishbones 116 and 118. The geometric axis of articulation of the steering knuckle with respect to the stub axle is labelled a, and the points about which the two wishbones are articulated with respect to this steering knuckle are labelled p₁ and p₂, and the axis connecting these two points p₁ and p₂ is labelled a'.

It will be noted that, by comparison with the invention, in which A and A' coincide, the axes a and a' are separate in the prior art, while remaining more or less parallel. As a result, when the stub axle applies a load f to the steering knuckle, there is a significant turning moment applied to the axis a. This turning moment, labelled c, is of magnitude c = f × l, where l corresponds to the distance separating the axes a and a' at the point at which the load f is applied.

As a result, in the prior art, the fact that this turning moment exists tends to cause the steering knuckle to pivot with respect to the wishbones about the axis a'. This being the case, the solutions of the prior art have to resort to a complex structure, such as a pivot 120 for example, in order to prevent such rotation.

By contrast, by virtue of the invention, the turning moment applied to the links 20 and 22 is substantially 0. This being the case, it is possible to use mechanical elements 20 and 22 that are distinctly simpler than in the prior art, because there is no need for these linking elements to oppose forces of pivoting about A.

According to the invention, the axis of alignment A' and the axis of articulation A are substantially coincident. That means that these two axes can be slightly offset, namely that they can make a very small angle of the order of a few degrees. When they do, the magnitude of the turning moment thus created is lower than the rigidity forces of necessity associated with the elastic links 20 and 22, which means that these turning moments are incapable of causing the steering knuckle to pivot with respect to the wishbones about the axis A.

## Claims

1. Suspension for a road vehicle, particularly for a bus, coach or heavy goods vehicle, comprising a stub axle (2) that can be secured to a hub (4) supporting a wheel of the said vehicle, this stub axle (2) being articulated and pivotable with respect to a steering knuckle (6) about an axis of articulation (A) inclined with respect to the vertical, this suspension further comprising two wishbones, an upper wishbone (16) and a lower wishbone (18), respectively, which are articulated with respect to the steering knuckle, the two points (P₁, P₂) about which the two wishbones (16, 18) are articulated with respect to the steering knuckle are positioned substantially on the axis of articulation (A), said suspension comprising suspension elements, particularly a suspension pad (34) and at least one shock absorber (36) and preferably at least one anti-roll bar, these suspension elements exerting on the steering knuckle forces (F₃₄, F₃₆) the directions of which lie in a plane containing the axis of articulation (A), said suspension pad (34) exerting on the steering knuckle a vertically and downwardly directed force (F₃₄) having a tendency to oppose any pivoting of this steering knuckle about this axis of articulation (A), said suspension pad (34) being a suspension spring, charachterized in that said shock absorber (36) exerts on the steering knuckle a vertically and upwardly or downwardly directed force (F₃₆).

2. Suspension according to claim 1, **characterized in that** each wishbone, the upper wishbone (16) and lower wishbone (18) respectively, is articulated to the steering knuckle (6) via a corresponding elastic link (20, 22).

3. Road vehicle, particularly a bus, coach or heavy goods vehicle, comprising a suspension according to Claim 1 or 2.

## Patentansprüche

1. Aufhängung für ein Straßenfahrzeug, insbesondere für einen Bus, einen Reisebus oder ein Fahrzeug für schwere Güter, umfassend einen Achsen-Abschnitt (2), der an einer Nabe (4) befestigt sein kann, die ein Rad des Fahrzeugs trägt, wobei dieser Achsen-Abschnitt (2) gelenkig gelagert und schwenkbar in Bezug auf einen Achsschenkel (6) um eine Gelenk-Achse (A) ist, die in Bezug auf die Vertikale geneigt ist, wobei diese Aufhängung weiter zwei Querlenker umfasst, nämlich einen oberen Querlenker (16) bzw. einen unteren Querlenker (18), die in Bezug auf den Achsschenkel gelenkig gelagert sind und die beiden Punkte (P₁, P₂), um die die beiden Querlenker (16, 18) in Bezug auf den Achsschenkel gelenkig gelagert sind, im Wesentlichen auf der Gelenk-Achse (A) positioniert sind, wobei die Aufhängung Aufhängungs-Elemente umfasst, insbesondere einen Aufhängungs-Träger (34) und wenigstens einen Stoßdämpfer (36) und vorzugsweise wenigstens einen Stabilisator, wobei diese Aufhängungs-Elemente Kräfte (F₃₄, F₃₆) auf den Achsschenkel ausüben, deren Richtungen in einer Ebene liegen, die die Gelenk-Achse (A) enthält, wobei der Aufhängungs-Träger (34) auf den Achsschenkel eine vertikal und nach unten gerichtete Kraft (F₃₄) ausübt, die eine Neigung dazu hat, jeglichem Schwenken dieses Achsschenkels um diese Gelenk-Achse (A) entgegenzuwirken, wobei der Aufhängungs-Träger eine Tragfeder ist, **dadurch gekennzeichnet, dass** der Stoßdämpder (36) auf den Achsschenkel eine vertikal und aufwärts oder abwärts gerichtete Kraft (F₃₆) ausübt.

2. Aufhängung nach Anspruch 1, **dadurch gekennzeichnet, dass** jeder Querlenker, nämlich der obere Querlenker (16) bzw. der untere Querlenker (18), gelenkig an dem Achsschenkel (6) über eine entsprechende elastische Verbindung (20, 22) gelagert ist.

3. Straßenfahrzeug, insbesondere ein Bus, Reisebus oder Fahrzeug für schwere Güter, umfassend eine Aufhängung gemäß Anspruch 1 oder 2.

## Revendications

1. Suspension pour un véhicule routier, particulièrement pour un bus, un autocar ou poids lourds, comprenant un demi-essieu (2) qui peut être fixé à un moyeu (4) supportant une roue dudit véhicule, ce demi-essieu (2) étant articulé et apte à pivoter relativement à une fusée d'essieu (6) autour d'un axe d'articulation (A) incliné par rapport à la verticale, cette suspension comprenant en outre deux doubles fourchettes, une double fourchette supérieure (16) et une double fourchette inférieure (18), respectivement, qui sont articulées relativement à la fusée d'essieu, les deux points (P1, P2) autour desquels les doubles fourchettes (16, 18) sont articulés par rapport à la fusée d'essieu sont positionnés sensiblement sur l'axe d'articulation (A), ladite suspension comprenant des éléments de suspension, en particulier un coussinet de suspension (34) et au moins un amortisseur de chocs (36) et de préférence au moins une barre antiroulis, ces éléments de suspension exerçant sur la fusée d'essieu des forces (F₃₄, F₃₆) dont les directions se situent dans un plan contenant l'axe d'articulation (A), ledit coussinet de suspension (34) exerçant sur la fusée d'essieu une force dirigée verticalement et vers le bas (F₃₄) ayant tendance à s'opposer à tout pivotement de cette fusée d'essieu autour de cette axe d'articulation (A), ledit coussinet de suspension (34) étant un ressort de suspension, **caractérisée en ce que** ledit amortisseur de chocs (36) exerce sur la fusée d'essieu une force dirigée verticalement et vers le haut ou vers le bas (F₃₆).

2. Suspension selon la revendication 1, **caractérisée en ce que** chaque double fourchette, la double fourchette supérieure (16) et la double fourchette inférieure (18), respectivement, est articulée à la fusée d'essieu (6) par une liaison élastique correspondante (20, 22).

3. Véhicule routier, particulièrement un bus, un autocar ou un poids lourds, comprenant une suspension selon la revendication 1 ou 2.
